# EUROPÄISCHE PATENTSCHRIFT

(11) **EP 1 328 946 B1**
(45) Veröffentlichungstag und Bekanntmachung des Hinweises auf die Patenterteilung: **28.06.2006**
(21) Anmeldenummer: 01983542.0
(22) Anmeldetag: 11.10.2001
(51) Int. Cl.: G21C 15/18, F16L 3/16

(54) **VORRICHTUNG ZUR KÜHLUNG DES KERNS EINES KERNREAKTORS**
DEVICE FOR COOLING THE CORE OF A NUCLEAR REACTOR
DISPOSITIF DE REFROIDISSEMENT DU COEUR D'UN REACTEUR NUCLEAIRE

(30) Priorität: 20.10.2000 DE 10052282
(43) Veröffentlichungstag der Anmeldung: 23.07.2003
(73) Patentinhaber: Framatome ANP GmbH, 91058 Erlangen (DE)
(72) Erfinder: LEIBOLD, Friedrich, 91230 Happurg (DE)
(74) Vertreter: Tergau & Pohl Patentanwälte
(86) Internationale Anmeldenummer: PCT/EP2001/011752
(87) Internationale Veröffentlichungsnummer: WO 2002/035551

(56) Entgegenhaltungen:
- JP-A- 2000 214 290
- US-A- 4 557 890
- US-A- 5 737 380
- DATABASE WPI Week 198644 Derwent Publications Ltd., London, GB; AN 1986-288390 XP002191344 & JP 61 210992 A (HITACHI LTD), 19. September 1986 (1986-09-19)
- PATENT ABSTRACTS OF JAPAN vol. 0141, no. 04, 26. Februar 1990 (1990-02-26) & JP 01 307694 A (TOSHIBA CORP)

## Beschreibung

Die Erfindung betrifft eine Vorrichtung zur Kühlung des Kerns eines Kernreaktors, insbesondere eines Siedewasserreaktors, mit oberhalb des Kerns angeordneten mit Sprühdüsen versehenen Verteilerrohren.

Eine solche Vorrichtung, die z.B. Kernsprühsystem genannt wird, ist beispielsweise aus der DE 32 45 451 C2 bekannt. Sie ist häufig im sogenannten Kerndeckel angeordnet.

Ein solches Kernsprühsystem wird nur im Bedarfsfall, z.B. bei einer Überhitzung des Kerns, in Betrieb genommen und dann mit kaltem Wasser beaufschlagt.

In der Regel besteht das Kernsprühsystem aus einem äußeren Verteilerring, von dem nach innen gerichtete Verteilerrohre ausgehen, die mit Sprühdüsen versehen sind. Der Verteilerring und die Verteilerrohre sind an einem Tragrost befestigt, der seinerseits vom Reaktordeckel gehalten sein kann.

Falls zur Kühlung des Kerns kaltes Wasser (Temperatur z.B. 20 °C) in die Rohre des Kernsprühsystems gelangt, kommt es aufgrund der Abkühlung der Rohre des Kernsprühsystems zu Längenänderungen dieser Rohre, da sie zuvor die hohe Temperatur im Dampfraum des Reaktors, z.B. ca. 300 °C, angenommen hatten. Die plötzlichen Längenänderungen von z.B. mehreren Zentimetern können zu Rohrschäden und auch zu unerwünschten Schwingungen der Rohre führen. Diese Schwingungen können durch ein im Dampfraum vertikal strömendes Dampf-Wasser-Gemisch ausgelöst werden.

Der Erfindung liegt die Aufgabe zugrunde, eine Vorrichtung zur Kühlung des Kerns eines Kernreaktors anzugeben, bei der Beschädigungen infolge von Wärmedehnungen oder -kontraktionen vermieden werden. Es soll auch nicht zu Schwingungen der vorhandenen Rohre kommen, die auf Temperaturunterschiede zurückzuführen sind. Die Vorrichtung soll insbesondere bereits vorhandene Teile einbeziehen und leicht inspizierbar sein.

Die Aufgabe wird gemäß der Erfindung dadurch gelöst, dass die Verteilerrohre verschiebbar gelagert sind.

Damit wird der Vorteil erzielt, dass Dehnungen oder Kontraktionen der Rohre infolge des Einbringens von kaltem Wasser in die heißen Rohre nicht zu mechanischen Spannungen führen können. Folglich werden Beschädigungen und sogar Schwingungen vorteilhafterweise vermieden.

Beispielsweise sind die Verteilerrohre in Längsrichtung verschiebbar gelagert. Dazu können als solche bekannte Gleitlager dienen. Nach einem anderen Beispiel sind die Verteilerrohre an einem Tragrost seitlich verschiebbar gelagert. Hierdurch können auch Wärmedehnungen in radialer Richtung keine Schäden verursachen. Es ist auch möglich die Verteilerrohre in Längsrichtung und seitlich verschiebbar zu lagern.

Geeignete Halterungen für die Verteilerrohre, die Wärmedehnungen in radialer Richtung ermöglichen, haben dazu beispielsweise in horizontaler Richtung quer zum Rohr jeweils eine Ausnehmung, die eine seitliche Bewegung des Rohres ermöglicht. In vertikaler Richtung sind die Rohre jedoch festgehalten.

Beispielsweise sind die Verteilerrohre in Halterungen gelagert, die an einem Verteilerrohr ungleichmäßig beabstandet sind. Damit wird der Vorteil erzielt, dass Schwingungen eines Verteilerrohres keine störenden stehenden Wellen verursachen können.

Die Verteilerrohre sind beispielsweise in einem Tragring für einen Kerndeckel gelagert.

Zur besseren Inspizierbarkeit kann die gesamte Vorrichtung zur Kühlung des Kerns als ein Bauteil vom Kerndeckel lösbar gelagert sein.

Mit der Vorrichtung zur Kühlung des Kerns eines Kernreaktors nach der Erfindung wird insbesondere der Vorteil erzielt, dass es beim Einspeisen von kaltem Wasser in die heißen Rohre der Kühlvorrichtung weder zu Beschädigungen der Rohre noch zu Schwingungen infolge einer durch den Temperaturunterschied verursachten Wärmedehnung oder -kontraktion kommen kann.

## Patentansprüche

1. Vorrichtung zur Kühlung des Kerns eines Kernreaktors, insbesondere eines Siedewasserreaktors, mit einem oberhalb des Kerns angeordneten Verteilerring, von dem nach innen gerichtete mit Sprühdüsen versehene Verteilerrohre ausgehen
**dadurch gekennzeichnet, dass** die Verteilerrohre verschiebbar gelagert sind.

2. Vorrichtung nach Anspruch 1,
**dadurch gekennzeichnet, dass** die Verteilerrohre in Längsrichtung verschiebbar gelagert sind.

3. Vorrichtung nach einem der Ansprüche 1 oder 2,
**dadurch gekennzeichnet, dass** die Verteilerrohre an einem Tragrost seitlich verschiebbar gelagert sind.

4. Vorrichtung nach einem der Ansprüche 1 oder 3,
**dadurch gekennzeichnet, dass** die Verteilerrohre in Halterungen gelagert sind, die an einem Verteilerrohr ungleichmäßig beabstandet sind.

5. Vorrichtung nach einem der Ansprüche 1 oder 4,
**dadurch gekennzeichnet, dass** die Verteilerrohre in einem Tragring für einen Kerndeckel gelagert sind.

## Claims

1. Device for cooling the core of a nuclear reactor, in particular a boiling water reactor, having a distributor ring which is arranged above the core and from which inwardly directed distributor tubes provided with spray nozzles extend, **characterized in that** the distributor tubes are mounted so that they can be displaced.

2. Device according to Claim 1, **characterized in that** the distributor tubes are mounted so that they can be displaced in the longitudinal direction.

3. Device according to one of Claims 1 and 2, **characterized in that** the distributor tubes are mounted on a support grid so that they can be displaced laterally.

4. Device according to one of Claims 1 and 3, **characterized in that** the distributor tubes are mounted in holders which are irregularly spaced along a distributor tube.

5. Device according to one of Claims 1 and 4, **characterized in that** the distributor tubes are mounted in a support ring for a core cover.

## Revendications

1. Dispositif de refroidissement du coeur d'un réacteur nucléaire, notamment d'un réacteur à eau bouillante, comprenant un anneau de répartiteur, qui est disposé au-dessus du coeur et duquel partent des tubes de répartiteur dirigés vers l'intérieur et munis de buses de projection, **caractérisé en ce que** les tubes de répartiteur sont montés coulissant.

2. Dispositif suivant la revendication 1, **caractérisé en ce que** les tubes de répartiteur sont montés coulissant dans la direction longitudinale.

3. Dispositif suivant l'une des revendications 1 ou 2, **caractérisé en ce que** les tubes de répartiteur sont montés coulissant latéralement sur une grille porteuse.

4. Dispositif suivant l'une des revendications 1 ou 3, **caractérisé en ce que** les tubes de répartiteur sont montés dans des fixations qui sont à des distances inégales sur un tube de répartiteur.

5. Dispositif suivant l'une des revendications 1 ou 4, **caractérisé en ce que** les tubes de répartiteur sont montés dans un anneau porteur d'un couvercle de coeur.
